# EUROPÄISCHE PATENTANMELDUNG

(11) **EP 0 557 923 A1**
(43) Veröffentlichungstag der Anmeldung: **01.09.1993**
(21) Anmeldenummer: 93102740.3
(22) Anmeldetag: 22.02.1993
(51) Int. Cl.: C08L 95/00, C08L 9/06, C08L 17/00, C08L 23/06

(54) **Verfahren zur Herstellung von heisslagerstabilem Bitumen**

(30) Priorität: 27.02.1992 DE 4206119; 01.07.1992 DE 4221557
(71) Anmelder: GUMMIWERK KRAIBURG DEVELOPMENT GmbH, D-84478 Waldkraiburg (DE)
(72) Erfinder: Schmidt, Peter, W-8264 Waldkraiburg (DE); Peter, Julius, Dr., A-1130 Wien (DE)
(74) Vertreter: Huber, Bernhard, Dipl.-Chem.

(57) **Zusammenfassung**

Zur Herstellung von heißlagerstabilem Bitumen mit verbesserten thermoplastischen Eigenschaften wird dem Bitumen ein Gemisch von Polymeren und Füllstoffen zugesetzt, welches durch Heißvermischen von a) Kautschuk oder/und Gummi bzw. Gummiregenerat mit b) einem oder mehreren thermoplastischen Polymeren und Füllstoffen hergestellt wird mit der Maßgabe, daß der Kautschuk, die Polymergrundlage des Gummis bzw. Gummiregeneratr je für sich eine relative Dielektrizitätskonstante von höchstens 3,0 aufweisen.

## Beschreibung

Die vorliegende Erfindung betrifft ein Verfahren zur Herstellung von heißlagerstabilem Bitumen mit verbesserten thermoplastischen Eigenschaften durch Heißvermischen und/oder Abbau und/oder Regenerieren eines Gemisches aus Kautschuk und/oder Gummi mit einem oder mehreren thermoplastischen Polymeren und Füllstoffen sowie dessen Verwendung zur Herstellung von Asphalt und Straßenbelag.

Bitumen ist kein einheitlicher, in sich homogener Werkstoff, sondern ein kolloidales System, gebildet aus kleinen Ansammlungen der höhermolekularen Bestandteile (Asphaltene), die stabil in den niedriger molekularen Bestandteilen (Maltene) verteilt sind. Die Bitumina selbst weisen eine dunkle Farbe auf und sind üblicherweise halbfest bis springhart.

Eine technische Bedeutung haben Bitumina vor allem durch ihre Verwendung als Antrichsstoffe im Bautenschutz, als Vergußmassen, als elektrisches Isoliermaterial sowie in der Herstellung von Dachpappen und bei der Abdichtung gegenüber Grundwasser erlangt. Die technisch größte Bedeutung hat Bitumen jedoch in seiner Verwendung als Straßenbaumaterial erlangt. Zur Herstellung von als Straßenbelag zu verwendendem Asphalt wird üblicherweise ein natürlich vorkommendes oder technisch gewonnenes Gemisch aus Bitumen mit Mineralstoffen sowie gegebenenfalls weiteren Zusatzstoffen und/oder Additiven versetzt. Es hat sich jedoch gezeigt, daß solche bitumenhältige Straßenbeläge ein unzureichendes Ermüdungsverhalten aufweisen. Auch das Verhalten bei niedrigen Temperaturen zeigt sich in der Praxis häufig als unzureichend, so daß regelmäßig Frostschäden auftreten, die mit großem Aufwand wieder repariert oder ausgebessert werden müssen. Es hat sich auch gezeigt, daß die Wärmestandfestigkeit von solchen Bitumen enthaltenden Straßenbelägen ebenfalls häufig unzureichend ist.

Es ist daher bereits versucht worden, die zuvor genannten Nachteile dadurch zu überwinden, daß man dem Straßenbaumaterial zur Verbesserung der Wärme- und Kältebeständigkeit Schwefel oder Maleinsäuroanhydrid zusetzt.

Es ist darüber hinaus auch schon vorgeschlagen worden, dem Bitumen unvernetzten Kautschuk wie z.B. Naturkautschuk, Butadien-Styrolcopolymerisate, thermoplastische Polymere, wie zum Beispiel Styrol-Butadien- oder Äthylen- Propylenblockcopolymerisate, oder auch Polyolefine wie z.B. Polyäthylen oder Polypropylen zuzusetzen. Auch gemahlener oder regenerierter Altgummi wurde bereits dem Bitumen zugesetzt bzw. in situ anregeneriert. Trotz der durch diese Maßnahmen erzielbaren Verbesserungen haften diesen Verfahren noch immer Nachteile in einzelnen wichtigen Punkten wie z.B. der Wärme- oder Kältefestigkeit, und/oder der für die Lagerung und den Transport modifizierter Bitumina wichtigen Punkt der Heißlagerstabilität an. Lediglich Naturkautschuk, Butadien- Styrolcopolymerisate und die Polymerisate auf Basis von Styrol-Butadien-Styrol und Ethylen-Propylen-Blockcopolymeren zeigen eine genügend große Anquellbarkeit, daß lagerstabile Gemische erhalten werden. In den anderen Fällen tritt ein allmähliches Aufrahmen oder Absetzen ein, so daß die Gemische entweder an Ort und Stelle hergestellt werden müssen oder nur unter dauerndem Rühren gelagert oder transportiert werden können.

Unvernetzter Kautschuk hat eine zu geringe Thermoplastizität und verbessert daher die Wärmestandfestigkeit nicht in genügendem Maße. Blockcopolymerisate und vor allem Polyolefine erhöhen zwar die Wärmestandfestigkeit, verschlechtern aber die Kältefestigkeit. Gemahlener Altgummi löst sich nicht in Bitumen. Demgegenüber löst sich zwar regenerierter Altgummi weitgehend in Bitumen, zeigt jedoch aber nur eine geringe Verbesserung der Wärmestandfestigkeit.

Die vorliegende Erfindung hat zum Ziel, die zuvor genannten Nachteile zu überwinden.

Erfindungsgemäß wurde überraschenderweise gezeigt, daß sich ein Bitumen herstellen läßt, das eine gute Wärmestandfestigkeit, gute Kälteeigenschaften und eine befriedigende Heißlagerstabilität aufweist, wenn man dem Bitumen ein Gemisch zusetzt, das dadurch gekennzeichnet ist, daß dem Bitumen ein Gemisch von Polymeren und Füllstoffen zugesetzt wird, welches durch Heißvermischen von a) Kautschuk oder/und Gummi bzw. Gummiregenerat mit b) einem oder mehreren thermoplastischen Polymeren und Füllstoffen hergestellt wird mit der Maßgabe, daß der Kautschuk, die Polymergrundlage des Gummis bzw. Gummiregenerats je für sich eine relative Dielektrizitätskonstante von höchstens 3,0 aufweisen.

Kautschuk, Gummi, Gummiregenerat und thermoplastisches Polymer dürfen eine relative Dielektrizitätskonstante von höchstens 3,0 aufweisen, d.h. sie müssen unpolar oder schwach polar sein. Typische Beispiele für Substanzen, die diese Bedingungen erfüllen und daher im Rahmen der Erfindung eingesetzt werden könnten sind aus der nachstehenden Tabelle zu entnehmen.

**Tabelle**

| Substanzen | relative Dielektrizitätskonstante |
|---|---|
| Naturkautschuk | 2,8 |
| Styrolbutadiencopolymere | 2,6 |
| Polybutadien | 2,2 |
| Butylkautschuk | 2,2 |
| Polyethylen | 2,3 |
| Polystyrol | 2,6 |
| Polypropylen | 2,3 |

Als Kautschuk werden für die Zwecke des Verfahrens der Erfindung bevorzugt verwendet natürliches oder synthetisches Polyisopren, Butadien- Styrolcopolymerisat mit einem Butadiengehalt von 95 bis 60 %, bzw. einem Styrolgehalt von 5 bis 40 %, besonders bevorzugt von 77 bis 72 % Butadien bzw. 23 bis 28 % Styrol, 1,4-Polybutadien, 1,2-Polybutadien, vulkanisationsfähige Polymere von Ethylen-Propylen oder Isobutylen oder/und Regenerate von gefüllten oder ungefüllten Vulkanisaten der vorstehend genannten Polymere.

Als thermoplastische Polymerkomponente werden bevorzugt Polystyrol, polymerisierte Styrol-Butadienmischpolymerisate mit einem Styrolgehalt von 95 bis 60 %, bzw. einem Butadiengehalt von 5 bis 40 % und Polyolefine, wie z.B. Polyethylen oder Polypropylen verwendet.

Bevorzugte Füllstoffe für die Zwecke der Erfindung sind aktive oder inaktive Rußarten, Kieselsäuren, Kreide, Kaolin, Schwerspat u. dgl..

Vorzugsweise stellt man spezifische Gewicht des Polymer-Füllstoffgemisches so ein, daß es nicht mehr als 10 % vom spezifischen Gewicht des Bitumens nach oben oder unten abweicht. Hierzu werden Menge und Art des Füllstoffzusatzes entsprechend gewählt.

Gummi kann im Rahmen der Erfindung als solcher oder als Gummiregenerat eingesetzt werden. Es ist auch möglich, die Bildung von Gummiregenerat in situ während des Verfahrens durchzuführen, indem man die Heißmischungsbedingungen so einstellt, daß sie gleichzeitig eine Regeneratbildung aus dem Gummi bewirken. Der Kautschuk oder/und Gummi wird mit dem thermoplastischen Polymeren je nach dem gewünschten Misch- oder Abbaugrad bei einer Temperatur zwischen 100 bis 270°C gemischt. Dabei kann der Abbau bis zur vollständigen Regenerierung geführt werden.

Das Regenerieren von Gummi ist bekannt und wird üblicherweise bei 200 bis 270°C und vorzugsweise bei 220 bis 250°C durchgeführt. Die bekannten Regenerierverfahren arbeiten mit Temperaturen von 200 bis 250°C in Heißluft, Heißdampf oder Dampf-Luftgemischen. Dabei beträgt die Behandlungszeit je nach der gewählten Temperatur zwischen einigen Minuten hin bis zu mehreren Stunden und sind dem Fachmann bekannt bzw. lassen sich ohne weiteres durch einfache Versuche ermitteln.

Kautschuk, Gummi und thermoplastisches Polymeres sowie Füllstoff können auf beliebige Weise vermischt werden. Vorzugsweise werden die Komponenten jedoch in einer Ein- oder Doppelwellenschnecke, einem Innenmischer oder einer Mischschnecke mit Stauzonen gemischt, wobei gleichzeitig ein Abbau oder ein Regenerieren durchgeführt werden kann. Dabei werden die Komponenten zweckmäßigerweise in gemahlener oder granulierter Form vermischt. Zweckmäßig wird eine Korngröße von 0,1 bis 20 mm, vorzugsweise 1 bis 7 mm, besonders bevorzugt von 2 bis 5 mm eingesetzt. Durch die Auswahl der jeweiligen Korngröße lassen sich Zeitdauer und Energieaufwand der Misch-, Abbau- oder Regenerierungsprozesse steuern, und zwar laufen diese umso schneller ab, je niedriger die Korngrößen sind.

Die nach dem erfindungsgemäßen Verfahren gewonnenen Zusammensetzungen werden dem Bitumen üblicherweise in einer Menge von 0,1 bis 20 Gew.-%, vorzugsweise 2 bis 10 % zugesetzt. Es hat sich ebenfalls als zweckmäßig erwiesen, dem erfindungsgemäßen Bitumen andere Additive wie z.B. Mineralöle oder Abfälle der Mineralölwirtschaft zuzusetzen. Zur Erleichterung der späteren Dispersion in Bitumen kann es auch zweckmäßig sein, einen Teil des Bitumens bereits während des Misch-, Abbau- oder Regenerierungsprozesses zuzusetzen.

Das spezifische Gewicht der durch Vermischen, Abbau oder Regenerieren von Kautschuk, Gummi und thermoplastischen Polymeren erhaltenen Zusammensetzung läßt sich vom Fachmann ohne weiteres durch Einstellung des Mischungsverhältnisses von Kautschuk, Gummi, thermoplastischen Polymeren und Füllstoffen wie z.B. Ruß erreichen. Erfindungsgemäß wurde gefunden, daß sich die Heißlagerstabilität des auf diese Weise erhaltenen Bitumens noch weiter erhöhen läßt, wenn man bereits bei der Regenerierung einen Teil dies Bitumens zusetzt.

Die durch das Heißvermischen erhaltene Masse wird dem Bitumen vorzugsweise in granulierter Form zugesetzt. Als zweckmäßig erweist es sich dabei, die Zusammensetzung durch Rühren im heißen Bitumen aufzulösen.

Die im erfindungsgemäßen Verfahren eingesetzten thermoplastischen Polymeren, Gummis und Kautschuk können aus Recyclingsubstanzen, Abfällen und Altgummi bestehen. Hierdurch wird eine sinnvolle Wiederverwendung derartiger Abfallprodukte ermöglicht.

### Beispiel 1

Ein Gemisch aus 100 Gew.-Teilen Gummimehl, dessen Polymerkette Styroleinheiten enthält, wie sie zum Beispiel durch Vermahlen von Pkw-Laufflächenabfällen bis zu einer Korngröße von 1 bis 7 mm gewonnen werden kann, wird gemeinsam mit 50.-Gew. Teile eines durch Emulsionspolymerisation hergestellten Mischpolymerisats aus 85 % Styrol mit 15 % Butadien vermischt und anschließend in einer Reaktionsschnecke 5 Minuten lang bei einer Temperatur von 220 bis 250°C regeneriert. Die so als Reaktionsmasse erhaltene Zusammensetzung wird anschließend in auf 150°C erwärmten Bitumen im Verhältnis 19 Teile Bitumen und 1 Teil Reaktionsgemisch durch Rühren aufgelöst. Die auf diese Weise hergestellten modifizierten Bitumina zeigen eine sehr gute Heißlagerstabilität. Der unter Verwendung dieser Bitumenmasse hergestellte Asphaltbelag zeichnet sich durch eine hohe Kälte- und Wärmefestigkeit aus.

### Beispiel 2

Ein Gemisch aus 100 Gew.-Teilen Gummimehl, dessen Polymerkette aus Polyisopreneinheiten besteht, wie es z.B. durch Vermahlen von getrockneten Latexabfällen, Operations- oder Haushaltshandschuhen, Latex-Schaumgummimatrazen oder dergleichen hergestellt werden kann, wird mit 50 Gew.-Teilen eines durch Emulsionspolymerisation hergestellten Mischpolymerisats aus 85 % Styrol mit 15 % Butadien und 10 Gew.-Teile Ruß N 330 vermischt und anschließend in einer Reaktionsschnecke 3 Minuten bei 200 bis 230°C vermischt und dabei abgebaut. Die so als Reaktionsmasse erhaltene Zusammensetzung wird anschließend in auf 150°C erwärmten Bitumen im Verhältnis 19 Teile Bitumen und 1 Teil Reaktionsgemisch durch Rühren aufgelöst, wobei sich die Bitumenmasse durch eine hervorragende Heißlagerstabilität auszeichnet. Der unter Verwendung dieser Bitumenmasse hergestellte Asphaltbelag zeichnet sich durch eine hohe Kälte- und Wärmefestigkeit aus.

### Beispiel 3

Ein Gemisch aus 100 Gew.-Teilen Gummimehl, dessen Polymerkette aus Polyisopropeneinheiten besteht, wie es z.B. durch Vermahlen von getrockneten Latexabfällen, Operations- oder Haushaltshandschuhen oder Latex-Schaumgummimatratzen oder dergleichen hergestellt werden kann, wird mit 15 Gew.-Teilen Hochdruckpolyethylen und 20 Gew.-Teilen Ruß N 330 vermischt und anschließend in einer Reaktionsschnecke 3 Minuten bei 200 bis 230°C vermischt und dabei abgebaut. Die so als Reaktionsmasse erhaltene Zusammensetzung wird anschließend in auf 150°C erwärmten Bitumen im Verhältnis 19 Teile Bitumen und 1 Teil Reaktionsgemisch durch Rühren aufgelöst, wobei sich die Bitumenmasse durch eine hervorragende Heißlagerstabilität auszeichnete. Der unter Verwendung dieser Bitumenmasse hergestellte Asphaltbelag zeichnet sich durch eine außerordentlich hohe Kälte- und Wärmefestigkeit aus.

## Patentansprüche

1. Verfahren zur Herstellung von heißlagerstabilem Bitumen mit verbesserten thermoplastischen Eigenschaften,
**dadurch gekennzeichnet,**
daß dem Bitumen ein Gemisch von Polymeren und Füllstoffen zugesetzt wird, welches durch Heißvermischen von a) Kautschuk oder/und Gummi bzw. Gummiregenerat mit b) einem oder mehreren thermoplastischen Polymeren und Füllstoffen hergestellt wird mit der Maßgabe, daß der Kautschuk, die Polymergrundlage des Gummis bzw. Gummiregeneratr je für sich eine relative Dielektrizitätskonstante von höchstens 3,0 aufweisen.

2. Verfahren nach den Anspruch 1,
**dadurch gekennzeichnet,**
daß man als Kautschuk ein oder mehrere Substanzen aus der Gruppe natürliches oder synthetisches Polyisopren, Butadien- Styrolcopolymerisate mit einem Butadiengehalt von 95 bis 60 bzw. einem Styrolgehalt von 5 bis 40 %, 1,4 und 1,2 Polybutadien, vulkanisationsfähige Polymere von Ethylen-Propylen oder Isobutylen oder/und Regenerate von gefüllten oder ungefüllten Vulkanisaten der vorstehenden Polymeren verwendet werden.

3. Verfahren nach Anspruch 2,
**dadurch gekennzeichnet,**
daß man ein Butadien- Styrolcopolymerisat mit 72 bis 77 % Butadien und 28 bis 23 % Styrol verwendet.

4. Verfahren nach einem der vorhergehenden Ansprüche,
**dadurch gekennzeichnet,**
daß man als thermoplastisches Polymer ein oder mehrere Substanzen aus der Gruppe Polystyrol, polymerisierte Styrol- Butadienmischpolymerisate mit einem Styrolgehalt von 95 bis 60 %, bzw. Butadiengehalt von 5 bis 40 % und Polyolefin verwendet.

5. Verfahren nach Anspruch 4,
**dadurch gekennzeichnet,**
daß man als Polyolefin Polyethylen oder Polypropylen verwendet.

6. Verfahren nach einem der vorhergehenden Ansprüche,
**dadurch gekennzeichnet,**
daß man als Füllstoff wenigstens eine Substanz aus der Gruppe aktiver oder inaktiver Ruß, Kieselsäuren, Kreide, Kaolin, Schwerspat verwendet.

7. Verfahren nach einem der vorhergehenden Ansprüche,
**dadurch gekennzeichnet,**
daß man das spezifische Gewicht des Polymer-Füllstoffgemisches auf nicht mehr als ± 10 % Abweichung vom spezifischen Gewicht des Bitumens einstellt.

8. Verfahren nach einem der vorhergehenden Ansprüche,
**dadurch gekennzeichnet,**
daß das Vermischen bei Zusatz von Gummi unter den Bedingungen der Gummiregeneratbildung erfolgt.

9. Verfahren nach einem der vorhergehenden Ansprüche,
**dadurch gekennzeichnet,**
daß das Vermischen und gegebenenfalls Regenerieren bei einer Temperatur im Bereich von 100 bis 270°C durchgeführt wird.

10. Verfahren nach einem der vorhergehenden Ansprüche,
**dadurch gekennzeichnet,**
daß man das Vermischen und gegebenenfalls Regenerieren in einem Innenmischer, einer Einwellen- oder Doppelwellenschnecke oder in einer Mischschnecke mit Stauzonen durchführt.

11. Verfahren nach einem der vorhergehenden Ansprüche,
**dadurch gekennzeichnet,**
daß der Kautschuk, Gummi und Thermoplast mit einer Korngröße zwischen 0,1 und 20 mm eingesetzt werden.

12. Verfahren nach einem der vorhergehenden Ansprüche,
**dadurch gekennzeichnet,**
daß das Polymer- und Füllstoffgemisch dem Bitumen in granulierter Form zugesetzt wird.

13. Verfahren nach einem der vorhergehenden Ansprüche,
**dadurch gekennzeichnet,**
daß das Polymer- und Füllstoffgemisch dem Bitumen in einer Menge von 0,1 bis 20 % zugesetzt und durch Rühren im heißen Bitumen aufgelöst wird.

14. Verfahren nach einem der vorhergehenden Ansprüche,
**dadurch gekennzeichnet,**
daß man aus Altgummi hergestelltes Regenerat, thermoplastische Recycling-Polymere oder/und polymere Abfälle der Mineralölwirtschaft verwendet.

15. Verwendung nach dem Verfahren eines der vorhergehenden Ansprüche hergestellten Bitumens für Asphalt- und Straßenbeläge.
